# EUROPEAN PATENT SPECIFICATION

(11) **EP 1 565 876 B1**
(45) Date of publication and mention of the grant of the patent: **16.07.2008**
(21) Application number: 03753776.8
(22) Date of filing: 10.10.2003
(51) Int. Cl.: G06K 19/12, G06K 7/08, B42D 15/10, G03G 19/00, G06K 19/06

(54) **VERIFICATION SYTSEM FOR MAGNETICALLY-WRITTEN DATA**
ÜBERPRÜFUNGSSYSTEM FÜR MAGNETISCHE DATEN
SYSTEME DE VERIFICATION DE DONNEES ECRITES MAGNETIQUEMENT

(30) Priority: 26.11.2002 GB 0227455
(43) Date of publication of application: 24.08.2005
(73) Proprietor: ARJO WIGGINS LIMITED, Southampton, Hampshire SO15 1GA (GB)
(72) Inventor: SAUNDERS, Richard David, Berkshire SL4 3JZ (GB)
(74) Representative: Scott, Susan Margaret
(86) International application number: PCT/GB2003/004407
(87) International publication number: WO 2004/049249

(56) References cited:
- DE-A- 19 535 019
- US-A- 4 345 820
- US-A- 4 511 616
- US-A- 5 975 581

## Description

This invention relates to a verification system for magnetically written data.

International (PCT) Patent Application No. WO 01/92961A discloses a sheet material carrying a coating containing cavities in which electrically- and/or magnetically-activatable particles are located. The thus-coated sheet material is machine-writable and -readable in a similar manner to media such as audio or video tapes, and floppy and hard disks for use in computers. The magnetically-activatable particles disclosed in WO 01/92961A are of the same general kind as used in media as just referred to, and include chromium dioxide, iron oxide, polycrystalline nickel-cobalt alloys, cobalt-chromium or cobalt-samarium alloys, or barium-ferrite. The base sheet on which the particles are coated is typically a natural or synthetic paper.

Our PCT application PCT/GB2003/002162 describes a magnetically-activatable sheet product comprising a pair of laminated outer sheets at least one of which is provided with a pigment/binder primer coat on its inward facing surface, between which is a magnetic layer comprising magnetically-activatable particles in a binder matrix, the outer sheets having sufficient opacity to mask the appearance of the magnetic layer. PCT/GB2003/002148 describes a magnetically-activatable sheet product comprising a pair of laminated outer sheets between which is a magnetic layer comprising magnetically-activatable particles in a binder matrix, the outer sheets having sufficient opacity to mask the appearance of the magnetic layer; at least one of the outer sheets being provided on its outward facing surface with a coating which comprises either microcapsules containing a solution of at least one chromogenic material, or dispersed droplets containing at least one chromogenic material in a pressure-rupturable matrix, or a colour developer composition, or both microcapsules containing at least one chromogenic material and also a colour developer.

Such products are capable of carrying both visible (printed or written) information and magnetic information. There is a need for a simple and cheap security system for such products, so that it is readily possible to determine whether the magnetic information has been tampered with or has been corrupted.

Much prior art is devoted to encryption techniques, or to security labeling of objects.

DE 19535019 describes the application of a separate pattern of image or data onto the magnetic strip of a card, by means of magnetic material having a coercivity that differs from the coercivity of the magnetic strip which is already present on the card. This separate pattern is then used in a method of encrypting data on the card.

US 5975581 describes a method of confirming the authenticity of an article. A piece of semi-hard material is placed on the object, and "printed" with a magnetic image. This image, invisible to the naked eye, is visualised using a magnetic loop, and compared with an original to confirm authenticity.

US 4511616 describes laminated security tags which comprise a base layer, for example paper, a magnetic layer deposited on the base layer, and a vapour deposited metallic layer either over the magnetic layer or the opposite face of the base layer. The laminate provides dual levels of information recording: magnetic encoding of the magnetic layer, and electro-sensitive inscription of the metallic layer. The content of the magnetic layer may be read by a magnetic loop. One form of magnetic loop for visualising magnetic information is described in US 4345820.

US 3858514 describes a system for visualising magnetic data in which a permanent magnet sheet, typically having a coercive force of 1,400 oersteds, is encoded with Hollerith, ASCII or alphanumeric characters. These characters are read by superimposing the sheet adjacent a transfer sheet and supplying magnetic toner powder to the exposed surface of the transfer sheet, thereby rendering the data visible. The powder may be permanently affixed to the transfer sheet by known powder fixing techniques. The use envisaged is in credit cards.

EP 310707A describes a document, for example a banknote, containing an anti-forgery strip which contains a supporting layer of polyester, on which are deposited spaced magnetic deposits of iron oxide, typically by rotogravure or offset printing, which permits the deposition of varying amounts of oxide. The deposits are positioned in a particular format, for example a bar code, and are covered with a layer of paint. The printed pattern is permanently fixed, and can be read using a magnetic reader.

None of the prior art referred to above provides a solution to the particular problem of testing the integrity of magnetic data applied to a document.

We have now developed a simple and effective verification system, which utilizes the fraud resistant property of magnetic images. Alphanumeric data which has been magnetically written on to sheet products such as described above can be erased, overwritten or altered using magnetic data writing equipment which is fairly readily available. This can provide an opportunity for fraud. Pictorial or graphic magnetic images, though erasable, are less susceptible to fraudulent alteration because the equipment required to produce them is more specialized and less widely available, and unlike alphanumeric characters, images can be created individually rather than being of a standard form. The present invention requires that a pictorial or graphic reference image be magnetically written into a document or similar, in addition to normal alphanumeric data. If an attempt is made to tamper with the alphanumeric data, the magnetic fields used to create alterations will also disturb or corrupt the reference image. Therefore verification merely requires a check that the reference image is unaltered. This can be done using a variety of magnetic means, for example by dusting on "magnetic toner", i.e. a toner composition formulated to include magnetic particles or pigments (or, in principle, any other particulate magnetic material) or by means of a "magnetic loop", i.e. a "sandwich" of fine iron oxide particles in a liquid medium between two sealed transparent sheets, for example of glass or clear plastics material.

In either case, the magnetic particles take up a distribution corresponding to the magnetic field of the reference image with which they are brought into proximity. The configuration of the magnetic reference image remaining on the document is thereby revealed, and can be compared with the standard reference image. Conformity indicates the absence of tampering (and also of disturbance based on extraneous magnetic fields to which the document might have been exposed without fraudulent intent). By contrast, a significant disconformity suggests tampering or an attempt at tampering, or else exposure to extraneous fields which have corrupted the data.

It will be understood that in the context of this specification and claims, alphanumeric magnetic data is magnetic data stored in binary code form, for example in ASCII code or the like. Such codes convert computer binary code into a character code, and vice versa. Standard reading and writing equipment for binary code is widely used. In contrast, pictorial or graphic images may only be stored on a magnetic medium in analogue form. The writing of such images requires more specialist equipment, for example using a perpendicular multi-pin writing system, such as that used in the Nipson magnetographic printing systems.

Accordingly, the present invention provides a method of verifying the accuracy or authenticity of alphanumeric magnetic data on a document, wherein:
(a) the configuration of a pictorial or graphic magnetic reference image in the document is made visible by bringing movable particulate magnetic material into proximity therewith such that the particulate magnetic material takes up a distribution corresponding to the magnetic field of the reference image; and
(b) the magnetic image configuration thus revealed is compared with the original reference image to identify any significant disconformity suggesting past exposure of the document to a magnetic field capable, of altering said magnetic data.

If the reference image is generally intended to be read by an automated process, an analogue bar code (as distinct from a binary bar code which is equivalent to alphanumeric data) is a convenient image. If the reference image is generally intended to be read by the human eye, then a more visually appealing pictorial or graphical image is usually more convenient.

The invention also provides a method of storing alphanumeric magnetic data on a document and subsequently confirming its authenticity, which comprises storing a pictorial or graphic magnetic reference image on the document; writing said alphanumeric magnetic data to the document; making the configuration of said pictorial or graphical magnetic image visible by bringing movable particulate magnetic material into proximity therewith such that the particulate magnetic material takes up a distribution corresponding to the magnetic field of the reference image; and comparing the magnetic image configuration thus revealed with the reference image to identify any significant disconformity suggesting past exposure of the document to a magnetic field capable of altering said magnetic data.

The reference image may be written to the document before or after the data is written to the document, but is preferably written substantially simultaneously. In any event, it is important that the image and the data are written such that the writing of each does not interfere with the writing or reading of the other.

Typical credit card writing systems use a standard inductive writing head in a horizontal system - i.e. the poles of the magnet are on the same side of the substrate and the lines of magnetic flux run parallel to the magnetic substrate surface. Such systems are used to write alphanumeric data. More specialized equipment is required to write images. In the perpendicular pin writing system, the poles of the writing head are placed either side of the magnetic substrate. The key feature of this system is that the flux lines run perpendicular to the magnetic substrate. In the case of the Nipson system, the pins are in an array of 300 per inch. By moving a substrate past an array of such pins and pulsing them on and off, a pattern of magnetized dots in the form of an image can be generated.

It will be appreciated that the magnetic reference image is not initially visible to the naked eye, and therefore that the security afforded by the present invention is covert in nature, i.e. it will not be readily apparent that a security feature is present.

In its simplest form, the invention can be practiced as a manual verification method in which magnetic toner or other particulate magnetic material is dusted on to or otherwise applied to a document to be verified. The magnetic material particles stick to the magnetised areas of the document. A visual check can then be made to establish whether the reference image is both present and uncorrupted. As an alternative to the use of dusted on particulate material or similar, a magnetic loop can be used, as previously described.

As an alternative to manual verification as just described, the document to be verified can be passed through a modified magnetographic developing system which uses magnetic toner. The magnetic toner particles stick to the document only in its magnetised areas so developing the image. The developed toner image can be left unfused, so that the image used for verification can be wiped away and become invisible again, or fused, to provide a permanent image to facilitate comparison with the standard reference image. This comparison and the associated verification step could themselves be automated, rather than manual.

Suitably the document on which the method of the invention is carried out also carries visible information, and is preferably a sheet product with the properties of paper. Suitably the document comprises a layer of magnetic material, said layer being composed of a material such that the required data and/or images can be written, read and erased using conventional equipment. Preferably it is a sheet product containing a magnetic layer comprising magnetically-activatable particles in a binder matrix. Preferably it comprises a pair of laminated outer sheets between which is a magnetic layer comprising magnetically-activatable particles in a binder matrix, the outer sheets having sufficient opacity to mask the appearance of the magnetic layer. The outer sheets are suitably made of natural or synthetic paper. The outer sheets are preferably of paper, although plastic sheet materials which simulate the properties of paper (so-called "synthetic paper") can alternatively be used. The magnetic layer may be formed by a coating on the inwardly facing surface of one or both of the outer sheets, or may be formulated as a laminating adhesive which is applied as or just before the two outer sheets are brought together in a laminating press or similar equipment. Preferably, at least one outer sheet carries a pigment/binder coat on its inward facing surface so as to enhance the masking effect.

The magnetic layer should be composed of a material such that the required data and/or images can be written, read and erased using conventional equipment. Such equipment in practice requires the use of low-strength magnetic materials. Thus, the coercivity (magnetic strength) of the layer should be suitable for the intended use and should preferably be less than 500 oersteds. Suitably the layer is substantially homogenous, i.e. its coercivity is substantially uniform across its area, and preferably it extends over the whole area of the document, although layers of smaller area than the document may also be used. Suitable magnetic materials include chromium dioxide, iron oxide, polycrystalline nickel-cobalt alloys, cobalt-chromium or cobalt-samarium alloys, or barium-ferrite, although these do not constitute a comprehensive list of suitable materials.

In a further preferred embodiment, the document is part of a so-called "carbonless" or pressure-sensitive copying system. A business forms set using the transfer type of pressure-sensitive copying paper comprises an upper sheet (usually known as a "CB" sheet) coated on its lower surface with microcapsules containing a solution in an oil solvent or solvent composition of at least one chromogenic material and a lower sheet (usually known as a "CF" sheet) coated on its upper surface with a colour developer composition. If more than one copy is required, one or more intermediate sheets (usually known as "CFB" sheets) are provided, each of which is coated on its lower surface with microcapsules and on its upper surface with colour developer composition. In a variant of the above-described arrangement, the solution of chromogenic material may be present as dispersed droplets in a continuous pressure-rupturable matrix instead of being contained within discrete pressure-rupturable microcapsules. In another type of pressure-sensitive copying system usually known as a self-contained or autogenous system, microcapsules and colour developing co-reactant material are coated onto the same surface of a sheet. In a preferred embodiment of the present invention, the document comprises a magnetically-activatable sheet product comprising a pair of laminated outer sheets between which is a magnetic layer comprising magnetically-activatable particles in a binder matrix, the outer sheets having sufficient opacity to mask the appearance of the magnetic layer; at least one of the outer sheets being provided on its outward facing surface with a coating which comprises either microcapsules containing a solution of at least one chromogenic material, or dispersed droplets containing at least one chromogenic material in a pressure-rupturable matrix, or a colour developer composition, or both microcapsules containing at least one chromogenic material and also a colour developer. Because of the nature of the processes in which pressure-sensitive papers are commonly used, the ability of one or more sheets of a set to carry magnetic information as well as visible information is a major advance, since it reduces or eliminates the requirement for human intervention and/or the requirement for retention of data stored, for example on business forms, in physical rather than electronic form. This provides major benefits in terms of paper handling and consequential lowering of costs, in numerous circumstances. The present invention is especially useful in such circumstances, where the opportunity for fraud or for corruption of data is significant.

The invention also extends to a document or other sheet product suitable for verification by a method according to the invention which comprises magnetic material which has a coercivity which is substantially uniform across its area, and which carries a pictorial or graphic magnetic reference image in addition to alphanumeric magnetic data. The invention further extends to a document or other sheet product suitable for verification by a method according to the invention which comprises a pair of laminated outer sheets between which is a magnetic layer comprising magnetically-activatable particles in a binder matrix, the outer sheet having sufficient opacity to mask the appearance of the magnetic layer, and which carries a pictorial or graphic magnetic reference image in addition to alphanumeric magnetic data. Said documents preferably have characteristics as described above.

The invention will now be illustrated by the following Example, in which all parts and percentages are by weight unless otherwise stated.

A 49 g m⁻² strong lightweight base paper of the kind conventionally used in pressure-sensitive copying paper was blade coated on a large-scale pilot plant coater with a 46% solids content aqueous primer coat formulation of the following composition:

| Component | Parts by weight (dry |
|---|---|
| basis) | |
| Calcined clay | 100 |
| Oxidised potato starch | 5 |
| Styrene-butadiene latex | 15 |

The coatweight applied was about 9 g m⁻² on a dry basis, and the result was an opaque paper with a flat primer-coated surface.

The primer coated surface was then coated with a 41% solids content aqueous magnetic coating formulation using a small scale pilot plant blade coater. The coatweight applied was about 10 g m⁻² on a dry basis, and the coating formulation was as follows:

| Component | Parts by weight (dry |
|---|---|
| basis) | |
| Iron Oxide | 100 |
| Styrene-butadiene latex | 17.6 |

A small-scale pilot coater/laminating press was used to laminate one ply of primer- and magnetic-coated paper as just described to a primer-coated sheet as described above but which did not carry a magnetic coating. The magnetic-coated surface faced inward, so that it formed a magnetic layer between the two paper plies. A 15% solids content aqueous solution of polyvinyl alcohol was used as a laminating adhesive and was continuously rod coated on to the magnetic coating just before the laminating nip. A portion of the resulting product was then magnetically imaged (encoded) with a known bar code at 37.5 bpi (bits per inch) using an inductive magnetic writer of the kind conventionally used for encoding the magnetic strips of credit cards.

The bar code served as a reference image and covert security feature, and could be made visible using a magnetic loop.

The thus encoded sheet was then passed through the writer a second time, but with the writer arranged to write a different bar code. The magnetic loop was again used to make the resulting image on the sheet visible. The thus-visualised image was compared with the original reference image and found to be different, indicating that the sheet had been altered by exposure to a further magnetic field after the original image had been applied.

## Claims

1. A method of verifying the accuracy or authenticity of alphanumeric magnetic data on a document, wherein:
(a) the configuration of a pictorial or graphic magnetic reference image in the document is made visible by bringing movable particulate magnetic material into proximity therewith such that the particulate magnetic material takes up a distribution corresponding to the magnetic field of the reference image; and
(b) the magnetic image configuration thus revealed is compared with the original reference image to identify any significant disconformity suggesting past exposure of the document to a magnetic field capable of altering said magnetic data or images.

2. A method as claimed in claim 1, in which the document also carries visible information.

3. A method as claimed in either claim 1 or claim 2, in which the document carries a layer of magnetic material which has a coercivity which is substantially uniform across its area.

4. A method as claimed in any one of claims 1 to 3, in which the document comprises a pair of laminated outer sheets between which is a magnetic layer comprising magnetically-activatable particles in a binder matrix, the outer sheet having sufficient opacity to mask the appearance of the magnetic layer.

5. A method as claimed in claim 4, wherein said outer sheets are of natural or synthetic paper.

6. A method as claimed in either claim 4 or claim 5, wherein the magnetic layer is formed by a coating on the inwardly facing surface of one or both of the outer sheets, or by a laminating adhesive which is applied as or just before the two outer sheets are brought together in a laminating press or similar equipment.

7. A method as claimed in any one of claims 4 to 6, in which at least one outer sheet carries a pigment/binder coat on its inward facing surface.

8. A method as claimed in any one of claims 4 to 7, at least one of the outer sheets being provided on its outward facing surface with a coating which comprises either microcapsules containing a solution of at least one chromogenic material, or dispersed droplets containing at least one chromogenic material in a pressure-rupturable matrix, or a colour developer composition, or both microcapsules containing at least one chromogenic material and also a colour developer.

9. A method of storing alphanumeric magnetic data on a document and subsequently confirming its authenticity, which comprises storing a pictorial or graphic magnetic reference image on the document; writing said alphanumeric magnetic data to the document; and subsequently verifying the accuracy or authenticity of said alphanumeric magnetic data by a method as claimed in any one of claims 1 to 8.

10. A document or other sheet product suitable for verification by a method as claimed in any one of claims 1 to 11 which comprises magnetic material which has a coercivity which is substantially uniform across its area, and which carries a pictorial or graphic magnetic reference image in addition to alphanumeric magnetic data.

11. A document or other sheet product suitable for verification by a method as claimed in any one of claims 1 to 8 which comprises a pair of laminated outer sheets between which is a magnetic layer comprising magnetically-activatable particles in a binder matrix, the outer sheet having sufficient opacity to mask the appearance of the magnetic layer, and which carries a pictorial or graphic magnetic reference image in addition to alphanumeric magnetic data.

12. A document as claimed in either claim 10 or claim 11, having characteristics as specified in any one of claims 2, 3, and 5 to 8.

## Patentansprüche

1. Verfahren zum Prüfen der Richtigkeit oder der Echtheit alphanumerischer Magnetdaten auf einem Dokument, wobei:
a) die Konfiguration eines piktografischen oder grafischen Magnetreferenzbildes in dem Dokument **dadurch** sichtbar gemacht wird, dass bewegliches partikuläres Magnetmaterial in die Nähe dazu gebracht wird, wodurch das partikuläre Magnetmaterial eine Verteilung einnimmt, die dem Magnetfeld des Referenzbildes entspricht; und
b) die so verdeutlichte Magnetbildkonfiguration mit dem originalen Referenzbild verglichen wird, um jede signifikante Nicht-Übereinstimmung zu identifizieren, die darauf hindeutet, dass das Dokument einem Magnetfeld zurückliegend ausgesetzt wurde, das geeignet ist, die Magnetdaten oder Bilder zu verändern.

2. Verfahren nach Anspruch 1, wobei das Dokument auch sichtbare Information trägt.

3. Verfahren entweder nach Anspruch 1 oder Anspruch 2, wobei das Dokument eine Schicht eines Magnetmaterials trägt, welches eine Koerzitivkraft aufweist, die weitgehend gleichförmig über seine Fläche ist.

4. Verfahren nach einem der Ansprüche 1 bis 3, wobei das Dokument ein Paar laminierte Außenbögen aufweist, zwischen denen sich eine Magnetschicht befindet, umfassend magnetisch aktivierbare Partikel in einer Bindermatrix, wobei der Außenbogen eine ausreichende Opazität aufweist, um die Erscheinung der Magnetschicht zu maskieren.

5. Verfahren nach Anspruch 4, wobei die Außenbögen aus natürlichem oder synthetischem Papier sind.

6. Verfahren entweder nach Anspruch 4 oder Anspruch 5, wobei die Magnetschicht aufgetragen wird durch eine Beschichtung auf der nach innen weisenden Fläche einer oder beider der Außenbögen oder durch Laminieren von Klebstoff, der während oder kurz bevor die zwei Außenbögen in einer Laminierpresse oder vergleichbaren Einrichtung zusammengebracht werden, aufgetragen wird.

7. Verfahren nach einem der Ansprüche 4 bis 6, wobei mindestens ein Außenbogen eine Pigment/Binder-Schicht auf seiner nach innen weisenden Fläche trägt.

8. Verfahren nach einem der Ansprüche 4 bis 7, wobei mindestens einer der Außenbögen an seiner nach außen weisenden Fläche mit einer Beschichtung versehen ist, die entweder Mikrokapseln umfasst, enthaltend eine Lösung mindestens eines chromogenen Materials oder verteilte Tropfen, enthaltend mindestens ein chromogenes Material in einer unter Druck zerbrechenden Matrix oder eine Farbentwicklerzusammensetzung oder sowohl Mikrokapseln, enthaltend mindestens ein chromogenes Material und auch einen Farbentwickler.

9. Verfahren zum Speichern alphanumerischer Magnetdaten auf einem Dokument und nachfolgend Prüfen seiner Richtigkeit, welches Speichern eines piktografischen oder grafischen Magnetreferenzbildes auf dem Dokument umfasst, Schreiben der alphanumerischen Magnetdaten auf das Dokument; und nachfolgend Prüfen der Richtigkeit oder Authentizität der alphanumerischen Magnetdaten durch ein Verfahren gemäß einem der Ansprüche 1 bis 8.

10. Dokument oder anderes Bogenprodukt, welches geeignet ist, um nach einem Verfahren gemäß einem der Ansprüche 1 bis 11 überprüft zu werden, wobei Magnetmaterial umfasst ist, welches eine Koerzivität aufweist, die im Wesentlichen gleichförmig über seine Fläche ist und die ein piktografisches oder grafisches Magnetreferenzbild zusätzlich zu alphanumerischen Magnetdaten trägt.

11. Dokument oder anderes Bogenprodukt, welches geeignet ist, um nach einem Verfahren gemäß einem der Ansprüche 1 bis 8 überprüft zu werden, wobei ein Paar laminierte Außenbögen umfasst ist, zwischen denen sich eine Magnetschicht befindet, die magnetisch aktivierbare Partikel in einer Bindermatrix umfasst, wobei der Außenbogen, der ausreichende Opazität aufweist, um die Erscheinung der Magnetschicht zu maskieren, und der ein piktografisches oder grafisches Magnetreferenzbild zusätzlich zu alphanumerischen Magnetdaten trägt.

12. Dokument entweder nach Anspruch 10 oder Anspruch 11, Charakteristiken aufweisend, wie in einem der Ansprüche 2, 3 und 5 bis 8 spezifiziert.

## Revendications

1. Procédé de vérification de l'exactitude ou de l'authenticité de données magnétiques alphanumériques sur un document, dans lequel :
(a) la configuration d'une image de référence magnétique illustrée ou graphique au sein du document est rendue visible en amenant un matériau magnétique particulaire mobile à proximité de celle-ci afin que le matériau magnétique particulaire adopte une répartition correspondant au champ magnétique de l'image de référence ; et
(b) la configuration de l'image magnétique ainsi révélée est comparée avec l'image de référence d'origine afin d'identifier toute discordance significative suggérant une exposition antérieure du document à un champ magnétique capable de modifier lesdites données ou images magnétiques.

2. Procédé selon la revendication 1, dans lequel le document porte également des informations visibles.

3. Procédé selon la revendication 1 ou la revendication 2, dans lequel le document porte une couche de matériau magnétique qui possède une coercivité qui est sensiblement uniforme sur sa surface.

4. Procédé selon l'une quelconque des revendications 1 à 3, dans lequel le document comprend une paire de feuilles externes stratifiées entre lesquelles se trouve une couche magnétique comprenant des particules pouvant être activées de manière magnétique dans une matrice de liant, la feuille externe ayant une opacité suffisante pour masquer l'apparition de la couche magnétique.

5. Procédé selon la revendication 4, dans lequel lesdites feuilles externes sont en papier naturel ou synthétique.

6. Procédé selon la revendication 4 ou la revendication 5, dans lequel la couche magnétique est formée en étant appliquée sur la surface tournée vers l'intérieur d'une ou de deux feuille(s) externe(s), ou à l'aide d'un adhésif de stratification qui est appliqué au moment où ou juste avant que les deux feuilles externes soient amenées ensemble dans une presse de stratification ou un équipement similaire.

7. Procédé selon l'une quelconque des revendications 4 à 6, dans lequel au moins une feuille externe porte un revêtement de pigment/de liant sur sa surface tournée vers l'intérieur.

8. Procédé selon l'une quelconque des revendications 4 à 7, au moins l'une des feuilles externes comportant sur sa surface tournée vers l'extérieur un revêtement qui comprend des microcapsules contenant une solution d'au moins un matériau chromogène, ou des gouttelettes dispersées contenant au moins un matériau chromogène dans une matrice pouvant être rompue par pression, ou une composition de révélateur de couleurs, ou des microcapsules contenant au moins un matériau chromogène et également un révélateur de couleurs.

9. Procédé de stockage de données magnétiques alphanumériques sur un document et de confirmation ultérieure de leur authenticité, qui comprend le stockage d'une image de référence magnétique illustrée ou graphique sur le document ; l'écriture desdites données magnétiques alphanumériques sur le document ; et la vérification ultérieure de l'exactitude ou de l'authenticité desdites données magnétiques alphanumériques à l'aide d'un procédé selon l'une quelconque des revendications 1 à 8.

10. Document ou autre produit en feuille convenant pour une vérification à l'aide d'un procédé selon l'une quelconque des revendications 1 à 11 qui comprend un matériau magnétique qui possède une coercivité qui est sensiblement uniforme sur sa surface, et qui porte une image de référence magnétique illustrée ou graphique en plus de données magnétiques alphanumériques.

11. Document ou autre produit en feuille convenant pour une vérification à l'aide d'un procédé selon l'une quelconque des revendications 1 à 8 qui comprend une paire de feuilles externes stratifiées entre lesquelles se trouve une couche magnétique comprenant des particules pouvant être activées magnétiquement dans une matrice de liant, la feuille externe ayant une opacité suffisante pour masquer l'apparition de la couche magnétique, et qui porte une image de référence magnétique illustrée ou graphique en plus de données magnétiques alphanumériques.

12. Document selon la revendication 10 ou la revendication 11, ayant les caractéristiques spécifiées dans l'une quelconque des revendications 2, 3 et 5 à 8.
